# EUROPEAN PATENT SPECIFICATION

(11) **EP 1 826 790 B1**
(45) Date of publication and mention of the grant of the patent: **15.12.2010**
(21) Application number: 07003572.0
(22) Date of filing: 21.02.2007
(51) Int. Cl.: H01H 9/02

(54) **Operation panel having flexible display**
Bedienungstafel mit flexibler Anzeige
Panneau de commande doté d'un affichage flexible

(30) Priority: 28.02.2006 JP 2006053273
(43) Date of publication of application: 29.08.2007
(73) Proprietor: FANUC LTD, Minamitsuru-gun, Yamanashi 401-0597 (JP)
(72) Inventor: Hashimoto, Yoshiki, Hadano-shi Kanagawa 257-0025 (JP); Ohya, Tomoki, Yamanashi 401-0511 (JP); Morita, Satoru, Oshino-mura Minamitsuru-gun Yamanashi (JP); Matsudaira, Tetsuro, Oshino-mura Minamitsuru-gun Yamanashi (JP)
(74) Representative: Thum, Bernhard

(56) References cited:
- WO-A-00/38332
- WO-A-01/09872
- GB-A- 2 359 690
- US-A1- 2005 250 532

## Description

### BACKGROUND OF THE INVENTION

### 1. Field of the Invention

The present invention relates to an operation panel having an operation key area and a display area.

### 2. Description of the Related Art

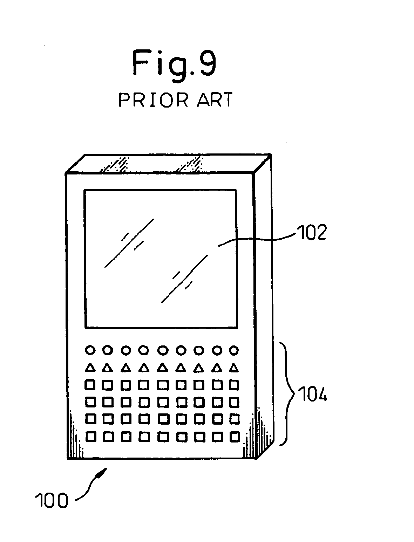

An operation panel, having a plurality of operation keys and a fixed display, must be provided with an operation key area required for operating all keys and a display area having a size sufficient to effectively indicate an image or information. For example, on a front face of a conventional operation panel 100 as shown in Fig. 9, a fixed display 102 and a plurality of operation keys 104 are arranged. Further, Japanese Unexamined Patent Publication No. 8-166814 discloses a robot teaching operation panel provided with a liquid crystal display (LCD) having a touch panel function.

In general, it is advantageous that an operation panel is as small as possible, as long as the operability and the visibility of the operation panel are not impaired, from the viewpoint of a production cost and the installation space for the operation panel. At this point, an operation panel as disclosed in Japanese Unexamined Patent Publication No. 8-166814, the display of which may also have an input function, is not necessarily provided with a considerable number of operation keys. However, an operation panel as shown in Fig. 9, having a large number of operation keys and a display on a front face thereof, cannot be downsized, due to the required size of the display and the number of the operation keys. As a result, it is difficult to effectively reduce the size of such an operation panel.

WO 00/38332 relates to an electronic device with hidden keyboard, wherein the electronic device includes a keyboard and a display. The keyboard allows entry of data into the device, and the display provides an information output. The display has a first position in which the display hides the keyboard, and the display has a second position in which the keyboard is exposed to allow entry of data via the keyboard. The display is visible to the user in both the first position and the second position.

### SUMMARY OF THE INVENTION

Accordingly, an object of the present invention is to provide an operation panel capable of being effectively made smaller, while the operability and the visibility are maintained at a conventional level.

To this end, according to the present invention, there is provided an operation panel provided with a display area and a key operation area including first and second operation keys, the operation panel having a first operation mode in which both the first and second operation keys are used and a second operation mode in which the second operation key is not used, wherein the operation panel has a flexible display configured to be moved between first and second positions, the flexible display being positioned at the first position in the first operation mode such that the flexible display does not cover the first and second operation keys, and the flexible display being positioned at the second position in the second operation mode such that the flexible display covers the second operation key.

The operation panel may further have a means for changing the position of the flexible display corresponding to the position of the second operation key.

Also, the operation panel may further have a means for disabling the second operation key covered by the flexible display in the second operation mode.

The key operation area may further have a third operation key positioned between the first and second operation keys and the operation panel may further have a third operation mode in which only the first operation key is used. In this case, the flexible display is positioned at a third position between the first and second position, in the third operation mode, such that the flexible display covers the second and third operation keys.

The operation panel may further have a means for changing the position of the flexible display corresponding to the position of the third operation key.

Also, the operation panel may further have a means for disabling the third operation key covered by the flexible display in the third operation mode.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 shows a schematic configuration of a robot system including an operation panel of the invention;
Fig. 2 shows an example of a configuration of a machine tool including the operation panel of the invention;
Fig. 3 shows a preferred embodiment of the operation panel used in a first operation mode;
Fig. 4 shows the operation panel of Fig. 1 used in a second operation mode;
Fig. 5 shows the operation panel of Fig. 1 used in a third operation mode;
Fig. 6 shows an example of a constitution for holding a flexible display in place;
Fig. 7a shows an example of another constitution for holding a flexible display in place
Fig. 7b shows a b-b section of Fig. 7a;
Figs. 8a and 8b show an operation panel without a storing part, indicating the position of the flexible display in the first and third operation modes, respectively; and
Fig. 9 shows a schematic configuration of an operation panel of the prior art.

### DETAILED DESCRIPTION

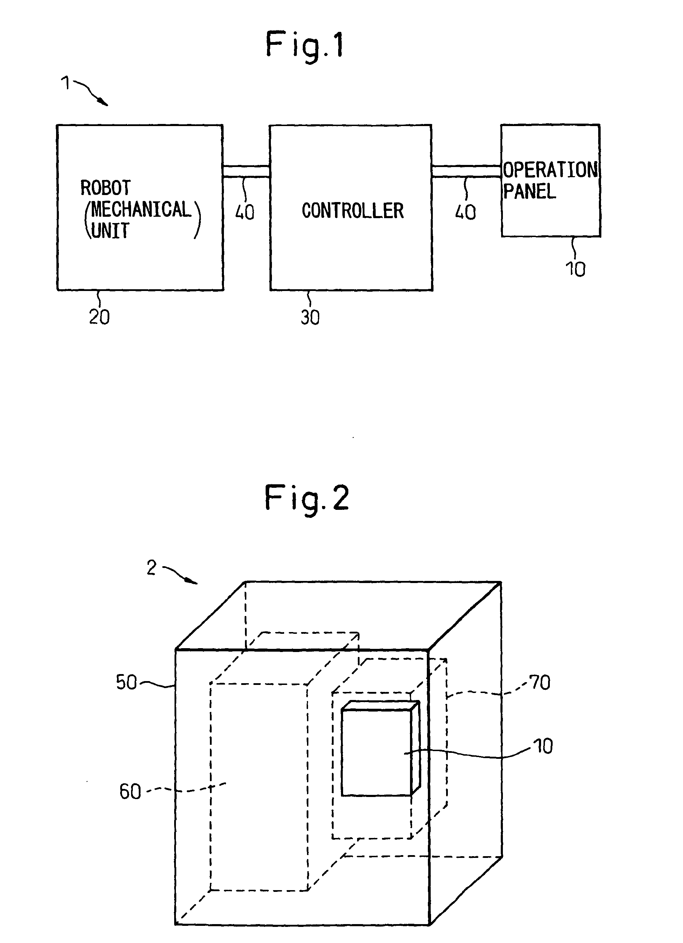

Hereinafter, the present invention is described with reference to the drawings. First, Fig. 1 shows a schematic configuration of a robot system 1 including an operation panel 10 of the invention. The operation panel 10 is connected to a control part or a controller 30 via a cable 40. The controller 30 is connected to a robot 20 for controlling the robot. Accordingly, by operating the operation panel 10, the robot 20 may be taught or manually operated. Such a basic constitution or function may be the same as that of a conventional robot system.

Fig. 2 shows an example of a configuration of a machine tool 2 including the operation panel 10. The machine tool 2 has a cabinet 50 containing a machining section 60 and a controlling section 70. The operation panel 10 is attached to a front face of the cabinet 50. By operating the operation panel 10, a machining program may be inputted and/or the machine tool 2 may be manually operated. Such a basic constitution or function also may be the same as that of a conventional machine tool.

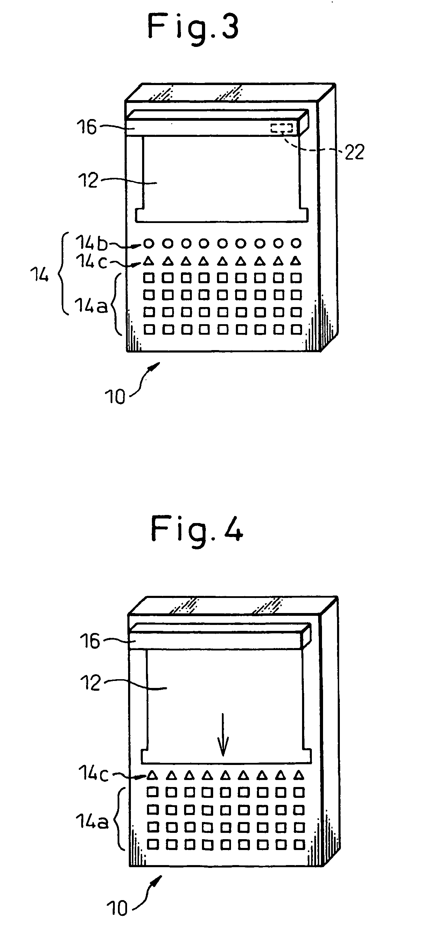

Fig. 3 shows details of the operation panel 10 as shown in Figs. 1 and 2. The operation panel 10 a display area or a display means 12 made from a flexible material which may be repeatedly wound and unwound, and a plurality of operation keys 14 or an operation area for inputting various command to the operation panel 10. These days, various types of flexible electric displays such as a display means 12 have been developed and the present invention utilizes the flexible display. The operation panel 10 has a storing part 16 capable of storing the flexible display 12 in a rolled state. The storing part 16 may be incorporated in a body of the operation panel 10. Each of the plurality of operation keys 14 may have a various size and the shape, corresponding to the function and/or application thereof. In this embodiment, for clarity, the operation keys 14 include a first operation key 14a, having a square shape, a second operation key 14b, having a circular shape, and a third operation key 14c, having a triangular shape, positioned between the first and second operation keys.

The operation panel 10 has several operation modes, for example, a first mode in which all operation keys 14a, 14b and 14c are used, a second mode in which only the second operation key 14b is not used, and a third mode in which only the first operation key 14a is used. In addition, it is assumed that the display of the operation panel used in the second mode is required or desired to be larger than that used in the first mode, and that the display used in the third mode is required or desired to be larger than that used in the second mode.

Fig. 3 shows the operation panel 10 used in the first operation mode. The flexible display 12 is positioned at a first position, at which the flexible display is partially stored in the storing part 16 such that all operation keys may be operated or effectively inputted. At this point, if the operation mode is required to be changed to the second mode, the flexible display 12 may be withdrawn from the storing part 16 to a second position, at which the flexible display 12 covers the second operation key 14b so as to enlarge the display area, as shown in Fig. 4. As described above, the second operation key 14b is not used in the second mode. Therefore, the display area in the second mode may be enlarged relative to the first mode. Power supply to the flexible display and transmission and reception of a control signal to and from the display may be carried out in the storing part 16.

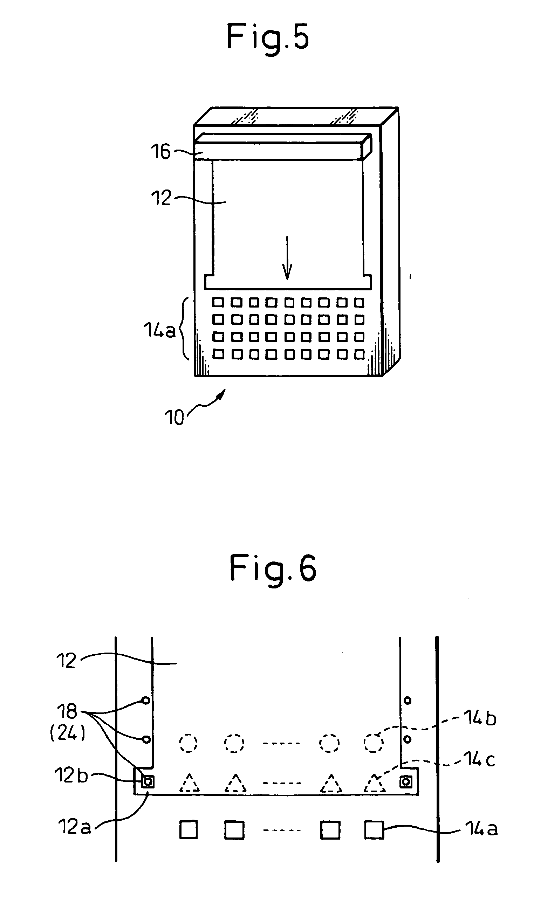

Also, if the operation mode is required to be changed to the third mode, the flexible display 12 may be further withdrawn from the storing part 16 to a third position, at which the flexible display 12 covers the second and third operation keys 14b and 14c so as to further enlarge the display area, as shown in Fig. 5. As described above, the second and third operation keys 14b and 14c are not used in the third mode. Therefore, the display area in the third mode may be enlarged relative to the second mode. In a conventional operation panel having a fixed display, the fixed panel must have size large enough to be used in the third mode requiring the largest display area, whereby the whole size of the operation panel is also enlarged. On the contrary, the operation panel of the present invention may be downsized, while maintaining the equivalent function of the conventional operation panel. Accordingly, the installation space and the production cost of the operation panel may be reduced.

Fig. 6 shows a structure for holding the flexible display 12 at a certain position, after the flexible display is withdrawn to that position. The flexible display 12 has a tab 12a integrally formed with either side of a lower end of the flexible display 12. A hole 12b is formed on the tab 12a. On the other hand, on portions of the operation panel 10 corresponding to the position of the hole 12b, protrusions 18 capable of engaging with the hole 12b are arranged. Due to this structure, the flexible display 12 may be held at a certain position by engaging the hole 12b with one of the protrusions 18. As shown in Fig. 6, by arranging a plurality of protrusions 18, the flexible display 12 may be held at desired positions including the first, second and third positions as described above.

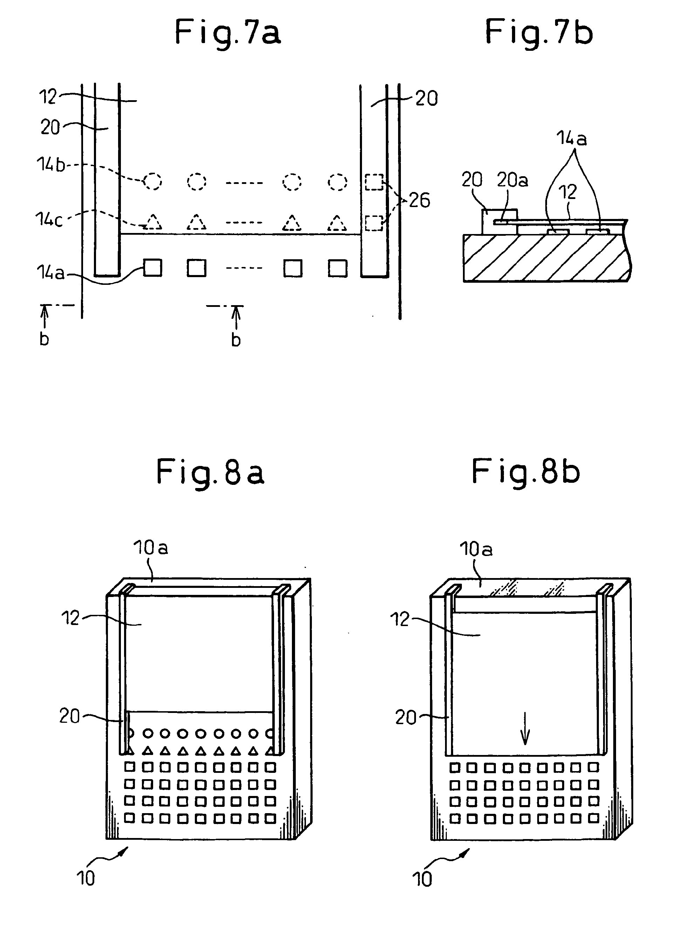

Figs. 7a and 7b another preferable structure for holding the flexible display 12 at a certain position. As shown in Fig. 7a, the operation panel 10 has a guide rail 20 capable of engaging with either side end of the flexible display 12. As shown in Fig. 7b, the guide rail 20 is configured such that the width of a groove 20a of the guide rail 20 for holding the flexible display 12 is substantially equal to the thickness of the side end of the flexible display. Due to this structure, the flexible display 12 may be held at an arbitrary position by a frictional force generated between the groove 20a and the side end of the flexible display 12.

As described above, the storing part 16 of the operation panel 10 may store the flexible display 12 in a wound-up state or a folded state. However, as shown in Figs. 8a and 8b, when the operation panel 10 is independent from the cabinet or the like and when an upper face 10a or a side face of the operation panel 10 other than the operation area (the front face) has a relatively large area, the storing part 16 may be removed and a part of the flexible display 12 may extend along the upper face 10a so as to change the display area of the operation panel 10. Figs. 8a and 8b show the positions of the flexible display 12 used in the first and third operation modes, respectively. In this case, power supply to the flexible display and transmission and reception of a control signal to and from the display may be carried by using a flexible cable (not shown). In addition, also in this case, the structure for holding the flexible display as shown in Fig.6 or 7 may be used. Figs. 8a and 8b schematically show the guide rail 20 similar to that of Fig. 7.

It is advantageous that the operation panel 10 has a means for disabling key input operation of a key, which is not to be used and covered by the flexible display 12, such as the second operation key in the second operation mode. For example, by arranging a detector 22 (Fig. 3) for detecting the length of the wound display 12 within the storing part 16, the current operation mode of the operation panel 10 may be judged. Then, when one or more keys should be disabled to be inputted in the current operation mode, key input operation against the key may be disabled by software control or hardware control. Otherwise, the current operation mode may be judged by using a contact sensor 24 arranged on the protrusion 18 as shown in Fig. 6 or another contact sensor 26 arranged on the guide rail 20 as shown in Fig. 7a.

According to the operation panel of the invention, the second operation key which is not used in the second operation mode may be covered by the flexible display, whereby the display area of the operation panel in the second mode may be larger than that in the first mode. Therefore, it is unnecessary to enlarge the size of the operation panel in order to ensure a sufficiently wide area for the second operation mode. Accordingly, the operation panel may be effectively reduced in size and the production cost thereof may be reduced, while the operability and the visibility are maintained at the conventional level. In addition, by providing the means for changing the position of the flexible display with the operation panel, a sufficient display area may be obtained even when the operation mode is changed (or a unused key is changed). Further, due to the means for disabling a key covered by the flexible display, incorrect input of the key may be surely avoided.

While the invention has been described with reference to specific embodiments chosen for the purpose of illustration, it should be apparent that numerous modifications could be made thereto, by one skilled in the art, without departing from the basic concept and scope of the invention.

## Claims

1. An operation panel (10) provided with a display area (12) and a key operation area (14) including first and second operation keys (14a, 14b), the operation panel having a first operation mode in which both the first and second operation keys (14a, 14b) are used and a second operation mode in which the second operation key (14b) is not used,
**characterized in that** the operation panel (10) has a flexible display (12) configured to be moved between first and second positions, the flexible display (12) being positioned at the first position in the first operation mode such that the flexible display (12) do not cover the first and second operation keys (14a, 14b), and the flexible display (12) being positioned at the second position in the second operation mode such that the flexible display covers the second operation key (14b), wherein the display area (12) at the second position in the second operation mode is larger than that at the first position in the first operation mode.

2. The operation panel according to claim 1, further comprising a means (12a, 12b, 18; 20) for changing the position of the flexible display (12) corresponding to the position of the second operation key (14b).

3. The operation panel according to claim 1, further comprising a means (22; 24; 26) for disabling the second operation key (14b), covered by the flexible display (12), in the second operation mode.

4. The operation panel according to claim 1, wherein the key operation area (14) further includes a third operation key (14c) positioned between the first and second operation keys (14a, 14b) and the operation panel (10) further has a third operation mode in which only the first operation key (14a) is used, and wherein the flexible display (12) is positioned at a third position between the first and second position, in the third operation mode, such that the flexible display (12) covers the second and third operation keys (14b, 14c).

5. The operation panel according to claim 4, further comprising a means (12a, 12b, 18; 20) for changing the position of the flexible display (12) corresponding to the position of the third operation key (14c).

6. The operation panel according to claim 4, further comprising a means (22; 24; 26) for disabling the third operation key (14c), covered by the flexible display (12), in the third operation mode.

## Patentansprüche

1. Bedienfeld (10) versehen mit einem Anzeigebereich (12) und einem Tastenbedienbereich (14), der erste und zweite Bedientasten (14a, 14b) aufweist, wobei das Bedienfeld einen ersten Bedienmodus, in welchem sowohl die erste als auch die zweite Bedientaste (14a, 14b) verwendet werden, und einen zweiten Bedienmodus, in welchem die zweite Bedientaste (14b) nicht verwendet wird, aufweist,
**dadurch gekennzeichnet, dass** das Bedienfeld (10) eine flexible Anzeige (12) aufweist, die dazu ausgebildet ist, sich zwischen einer ersten und einer zweiten Stellung zu bewegen, wobei die flexible Anzeige (12) in der ersten Stellung in dem ersten Bedienmodus derart positioniert ist, dass die flexible Anzeige (12) nicht die erste und zweite Bedientaste (14a, 14b) bedeckt, und die flexible Anzeige (12) in der zweiten Stellung in dem zweiten Bedienmodus derart positioniert ist, dass die flexible Anzeige die zweite Bedientaste (14b) bedeckt, wobei der Anzeigebereich (12) in der zweiten Stellung in dem zweiten Bedienmodus größer ist als der in der ersten Stellung in dem ersten Bedienmodus.

2. Bedienfeld nach Anspruch 1, weiter umfassend ein Mittel (12a, 12b, 18; 20) zum Ändern der Stellung der flexiblen Anzeige (12) entsprechend der Position der zweiten Bedientaste (14b).

3. Bedienfeld nach Anspruch 1, weiter umfassend ein Mittel (22; 24; 26) zum Abschalten der zweiten Bedientaste (14b), die durch die flexible Anzeige (12) in dem zweiten Bedienmodus bedeckt ist.

4. Bedienfeld nach Anspruch 1, wobei der Tastenbedienbereich (14) weiter eine dritte Bedientaste (14c) aufweist, die zwischen der ersten und der zweiten Bedientaste (14a, 14b) angeordnet ist, und das Bedienfeld (10) weiter einen dritten Bedienmodus aufweist, in welchem nur die erste Bedientaste (14a) verwendet wird, und wobei die flexible Anzeige (12) in dem dritten Bedienmodus derart in einer dritten Stellung zwischen der ersten und der zweiten Stellung positioniert ist, dass die flexible Anzeige (12) die zweite und dritte Bedientaste (14b, 14c) bedeckt.

5. Bedienfeld nach Anspruch 4, weiter umfassend ein Mittel (12a, 12b, 18; 20) zum Ändern der Stellung der flexiblen Anzeige (12) entsprechend der Position der dritten Bedientaste (14c).

6. Bedienfeld nach Anspruch 4, weiter umfassend ein Mittel (22; 24; 26) zum Abschalten der dritten Bedientaste (14c), die in dem dritten Bedienmodus durch die flexible Anzeige (12) bedeckt ist.

## Revendications

1. Panneau de commande (10) muni d'une zone d'affichage (12) et d'une zone de touches de fonction (14) comprenant des première et deuxième touches de fonction (14a, 14b), le panneau de commande comportant un premier mode de fonctionnement dans lequel à la fois les première et deuxième touches de fonction (14a, 14b) sont utilisées et un deuxième mode de fonctionnement dans lequel la deuxième touche de fonction (14b) n'est pas utilisée,
**caractérisé en ce que** le panneau de commande (10) comporte un affichage flexible (12) configuré pour être déplacé entre des première et deuxième positions, l'affichage flexible (12) étant positionné au niveau de la première position dans le premier mode de fonctionnement d'une manière telle que l'affichage flexible (12) ne recouvre pas les première et deuxième touches de fonction (14a, 14b), et l'affichage flexible (12) étant positionné au niveau de la deuxième position dans le deuxième mode de fonctionnement d'une manière telle que l'affichage flexible recouvre la deuxième touche de fonction (14b), dans lequel la zone d'affichage (12) au niveau de la deuxième position dans le deuxième mode de fonctionnement est plus grande que celle au niveau de la première position dans le premier mode de fonctionnement.

2. Panneau de commande selon la revendication 1, comprenant en outre un moyen (12a, 12b, 18 ; 20) destiné à changer la position de l'affichage flexible (12) correspondant à la position de la deuxième touche de fonction (14b).

3. Panneau de commande selon la revendication 1, comprenant en outre un moyen (22 ; 24 ; 26) destiné à désactiver la deuxième touche de fonction (14b), recouverte par l'affichage flexible (12), dans le deuxième mode de fonctionnement.

4. Panneau de commande selon la revendication 1, dans lequel la zone de touches de fonction (14) comprend en outre une troisième touche de fonction (14c) positionnée entre les première et deuxième touches de fonction (14a, 14b) et le panneau de commande (10) comporte en outre un troisième mode de fonctionnement dans lequel seule la première touche de fonction (14a) est utilisée, et dans lequel l'affichage flexible (12) est positionné au niveau d'une troisième position entre les première et deuxième positions, dans le troisième mode de fonctionnement, d'une manière telle que l'affichage flexible (12) recouvre les deuxième et troisième touches de fonction (14b, 14c).

5. Panneau de commande selon la revendication 4, comprenant en outre un moyen (12a, 12b, 18 ; 20) destiné à changer la position de l'affichage flexible (12) correspondant à la position de la troisième touche de fonction (14c).

6. Panneau de commande selon la revendication 4, comprenant en outre un moyen (22 ; 24 ; 26) destiné à désactiver la troisième touche de fonction (14c), recouverte par l'affichage flexible (12), dans le troisième mode de fonctionnement.
